Europäisches Patentamt

European Patent Office

Office européen des brevets

(19)

(11) Veröffentlichungsnummer: **0 331 610**
**A2**

(12) **EUROPÄISCHE PATENTANMELDUNG**

(21) Anmeldenummer: **89710012.9**

(22) Anmeldetag: **28.02.89**

(51) Int. Cl.⁴: **H 04 Q 7/04**
**H 04 B 7/26**

(30) Priorität: **01.03.88 DE 3806473**

(43) Veröffentlichungstag der Anmeldung:
**06.09.89 Patentblatt 89/36**

(84) Benannte Vertragsstaaten:
**AT BE CH DE ES FR GB GR IT LI LU NL SE**

(71) Anmelder: **Licentia Patent-Verwaltungs-GmbH**
**Theodor-Stern-Kai 1**
**D-6000 Frankfurt/Main 70 (DE)**

(72) Erfinder: **Schlegel, Udo**
**Lupinenweg 1**
**D-3300 Braunschweig (DE)**

**Sprengel, Franz**
**Sielkamp 44**
**D-3300 Braunschweig (DE)**

**Gode, Rolf**
**An der Grauwe 1a**
**D-3300 Braunschweig (DE)**

**Alvermann, Harald**
**Mühlenstrasse 14**
**D-3304 Wendeburg (DE)**

**Rumke, Axel**
**Stettiner Ring 7**
**D-3174 Meine-Grassel (DE)**

**Beerbom, Wilfried**
**Dunantring 7**
**D-3380 Goslar 1 (DE)**

(74) Vertreter: **Vogl, Leo, Dipl.-Ing.**
**Licentia Patent-Verwaltungs-G.m.b.H. Theodor-Stern-Kai 1**
**D-6000 Frankfurt 70 (DE)**

(54) **Mobiles Funktelefon.**

(57) Bei einem Mobilen Funktelefon mit einer Sende-Empfangseinrichtung und einer Bedieneinrichtung, ist vorgesehen, daß
die Sende-Empfangseinrichtung und die Bedieneinrichtung
über einen Adapter mit Schnittstellen C1 ... CN mit einem oder
mehreren Datenendgeräten verbunden sind, wobei der Adapter
einen Mikroprozessor den Zustand von sowie die Kommunikation zwischen Sende-Empfangseinrichtung, Dedieneinrichtung,
Modem und Datenendgeräten überwacht und steuert.

Fig 3

EP 0 331 610 A2

Bundesdruckerei Berlin

# Beschreibung

## Mobiles Funktelefon

Die Erfindung betrifft eine mobile Telefoneinrichtung, vorzugsweise ein Autotelefon, mit einer Sende-Empfangseinrichtung und einer Bedieneinrichtung und bezieht sich auf das Problem, die mit einem mobilen Telefon gegebenen Kommunikationskanäle für eine bewegliche Teilnehmerstation nicht nur für sprachgebundene Informationsvermittlung, sondern auch für allgemeineren Datentransfer mit on-line oder off-line Datenverarbeitung zu nutzen.

Eine Telefoneinrichtung, die sich auf dieses Problem bezieht, ist bereits aus Auto-Motor-Sport-Magazin, 3 (1988), Seite 144, bekannt. In der genannten Druckschrift wird die Kombination eines C-Netz- Autotelefons mit einem fest in einem PKW eingebauten Telefax-Gerät beschrieben; die Verbindung C-Netz-Telefax erfolgt dabei über ein Akustikkoppler, der an eine zweite Sprechstelle des Autotelefons angeschlossen wird. Mit dieser Vorrichtung ist jedoch nur ein begrenzter Teil der heute zur Verfügung stehenden Datenübertragungs- und Verarbeitungsmittel genutzt, wobei zusätzlich Bedien- und Betriebsprobleme dadurch auftreten können, daß das Telefax-Gerät über eine zweite Sprechstelle betrieben wird.

Aufgabe der vorliegenden Erfindung ist die Angabe einer Telefoneinrichtung, die eine umfassende mobile Datenkommunikation von Fahrzeugen ermöglicht. Dies wird entsprechend Patentanspruch 1 dadurch erreicht, daß die Sende-Empfangseinrichtung SE und die Bedieneinrichtung BD über einen Adapter AB mit Schnittstellen C1 ... - CIV mit einem oder mehreren Datenendgeräten DEE verbunden sind, wobei der Adapter einen Mikroprozessor MP und ein Modem MO aufweist und der Mikroprozessor den Zustand von sowie die Kommunikation zwischen Sende-Empfangseinrichtung, Bedieneinrichtung, Modem und Datenendgeräten überwacht und steuert.

Die Erfindung erweitert das Nutzungsspektrum einer Autotelefon-Anlage auf die automatische Übermittlung von Texten und Bildern zwischen den betreffenden Teilnehmern und anderen mobilen oder stationären Teilnehmern sowie auf off- und on-line Verarbeitung von Information. Sie ermöglicht insbesondere die Übermittlung von Dokumenten an Manager-PKWs, Einsatz- und Transportfahrzeuge, das Informieren von Personen bei Abwesenheit vom Fahrzeug, den Anschluß der mobilen Station an Mitteilungs- und Informationsdienste wie Btx, Telebox und Datenbanken. Bei Kombination mit einer City-Pilot-Anlage ergeben sich durch Abruf von Kartenausschnitten über Btx Anwendungsmöglichkeiten beim Fahren von sicherheitssensiblen Personen auf nicht bekanntgegebenen Wegen, bei Transport gefährlicher Güter, bei der Einsatzleitung von Polizei, Feuerwehr und Katastrophen-Hilfsdiensten oder beim Feststellen von Einsatzstandorten. Weitere vorteilhafte Anwendungen und Aufführungen der Erfindung werden in den Unteransprüchen angegeben.

Ausführungsbeispiele der Erfindung werden anhand der Figuren 1 - 6 erläutert.

Figur 1 zeigt schematisch den Aufbau des Adapters mit Schnittstellen zum Sende-Empfangsgerät, zur Bedieneinheit, zur einer portablen Workstation und zur Stromversorgung.

Figur 2 zeigt den Zeichenaufbau für die Schnittstellen vom Mikroprozessor zur Bedieneinheit und zum Sende-Empfangsgerät.

Figur 3 zeigt die Oben-Ansicht einer mit dem Funktelefon verbundenen Workstation.

Figur 4 zeigt die Seiten-Ansicht der Workstation aus.

Figur 5 zeigt die Workstation an Figur 4 bei geöffneten bzw. geschlossenem Deckel.

Figur 6 zeigt die Anordnung der Workstation in einem Kraftfahrzeug.

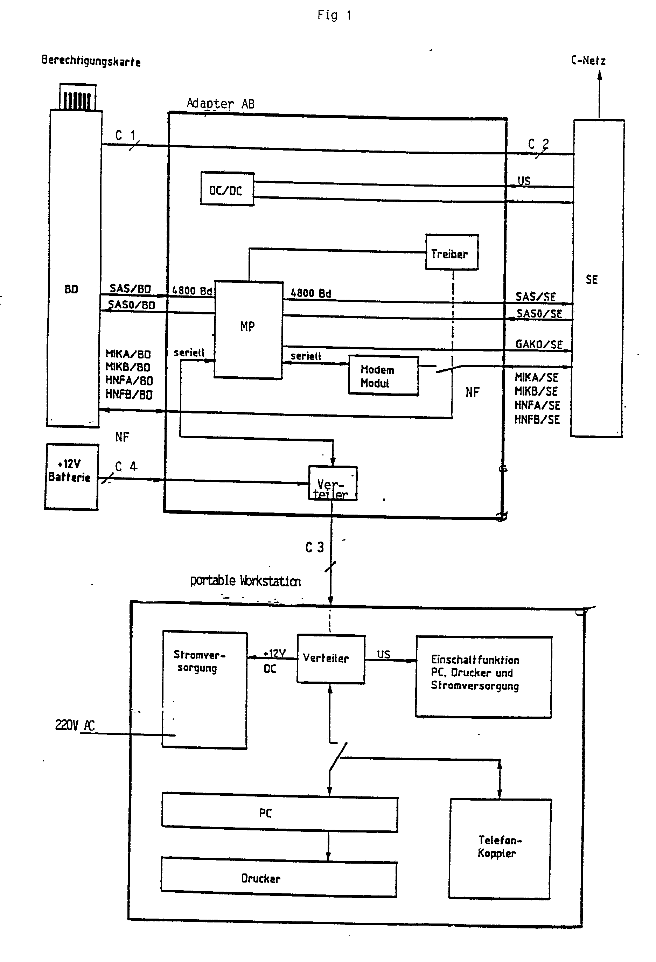

Der in Figur 1 dargestellte Adapter AB wird zwischen Sende-Empfangsgerät SE und Bedieneinrichtung BD des mobilen Funktelefons eingeschleift. Er kann so ausgeführt werden, daß er z. B. mit einem Autotelefon ständig im Fahrzeug bleibt, während die Workstation sich leicht vom Adapter trennen und auch separat einsetzbar ist. Der Adapter AB weist als Baugruppen einen zentralen Mikroprozessor MP, ein Modem-Modul MO, eine NF-Umleitung NF und ein Stromversorgungsmodul DC/DC und vier Schnittstellen C1, C2, C3, C4 zum Bediengerät BD, zum Sendeempfangsgerät SE für das C-Netz, zur portablen Workstation und zur 12V-Stromversorgung auf. Der Mikroprozessor dient zum Mithören und Einschleifen in die Kommunikation zwischen Sende-Empfangsgerät und Bediengerät , insbesondere steuert er die automatische Anwahl von Teilnehmern. Weiterhin steuert er das Adapter-interne Modem, die Weitergabe von Daten zwischen und Workstation und eventuellen anderen Datenendeinrichtungen und übernimmt und exekutiert Steuerbefehle der Workstation. Es kann hierfür z. B. ein Z80-kompatibler Prozessor mit integriertem CGC, CTC, PIO, SIO und Watchdog-Timer, externen RAM, ROM und zweiter SIO eingesetzt werden. Der Zustand des Autotelefons wird vom Mikroprozessor über die seriellen Empfangsleitungen SAS/BD und SASO/SE ausgewertet und über die Sendeleitung SASO/BD und SAS/SE durch Meldung und Befehle gesteuert.

Die Schnittstellen C1, C2 sind nach FTZ 171 R60, Abschnitt 8.4. Kontakttypbuchse, ausgeführt. Die Datenkommunikation erfolgt assynchron, bitseriell um Duplexbetrieb nach RS 232 bzw. V.24, jedoch mit TTL-Pegeln, wobei eine Übertragungsgeschwindigkeit von 4800 Baud vorgesehen ist.

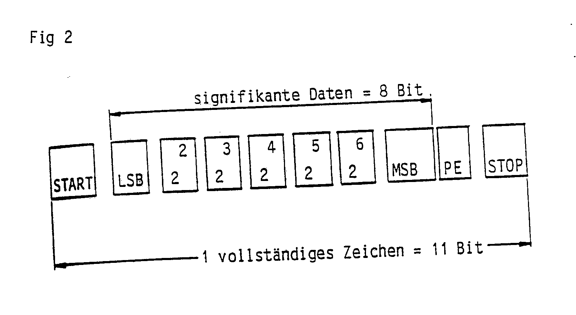

Figur 2 zeigt den Zeichenaufbau für die Kommunikation zwischen Mikroprozessor und Bediengerät bzw. Sende-Empfangsgerät. Danach ist ein 11-bitframe vorgesehen, mit der Bit-Folge: 1 Start-Bit (START), 8 Daten-Bit (LSB) in hexadezimaler Codierung oder ASCII-8 (MSB=0), ein Paritäts-Bit, ein Stop-Bit.

Die zwischen Mikroprozessor und Bediengerät bzw. Sende-Einrichtung ausgetauschten Meldungen haben folgende Struktur:

Eine gültige Meldung beginnt mit einer Meldungsnummer als erstem Zeichen gefolgt von einem oder mehreren Informationsbytes, den Trägern der eigentlichen Nutzinformation sowie einem Steuerzeichen ENDE, das dem letzten Informationsbyte folgt: Meldungsnummer Infobyte 1 ------Infobyte n ENDE. Die Durchnumerierung normaler Meldungen erfolgt im Wertebereich FO HEX ... FF HEX (binär, modulo 16). Der Empfänger erkennt eine zusammenhängende Meldung an einer zulässigen Meldungs-Nummer (Fn HEX, wobei n = 0 ... F HEX) und dem Steuerzeichen ENDE (00).

Wurde die Meldung fehlerfrei (d. h. alle Zeichen ohne Parity-Fehler) empfangen, wird sie beantwortet mit einer Quittungs-Meldung mit derselben Nummer n, jedoch im Wertebereich EO HEX ... EF HEX gefolgt von den Steuerzeichen ACK (06 HEX) und ENDE (00). Wird eine Meldung vom Empfänger nicht innerhalb der Quittungserwartungszeit (500 ms) quittiert, so folgen bis max. 4 Wiederholungen dieser Meldung (Meldungs-Nummer Fn HEX unverändert).

Über die Steuerleitung GAKO/SE wird dem Sende-Empfangsgerät die Aktivierung des Gabelkontakts des Bediengeräts mitgeteilt. Der GAKO/SE-Ausgang muß als Open-Collector-Treiber realisiert werden, da auch eine interne Ansteuerung im Sende-Empfangsgerät erfolgt.

Dabei bewirken die Zustände "Handapparat abgehoben" und "Anruf", daß der Mikroprozessor die NF-Signalwege NF zwischen Sende-Empfangsgerät und Bedieneinheit durchschaltet. Bei einer Datenübertragung werden dagegen die Leitung MIKA/SE, MIKB/SE, HNFA/SE, HNFB/SE mit Relais über NF-Übertrager zum Modem MO durchgeschaltet. Eine Durchschaltung von NF-Signalen zu Datenendgeräten an der Schnittstelle C3 erfolgt nicht. Die Zugangs- bzw. Benutzungskontrolle für das Funktelefon erfolgt durch Mikroprozessor und Magnetkarte. Hierfür sind Sondermeldungen vorgesehen.

Die Verbindung des Mikroprozessors zur Workstation über die Schnittstelle C3 ist nach der ISO 2110 V.24/V.28 für Daten und Steuerleitungen ausgeführt, wobei eine 12V-Spannungsversorgung für die Workstation über die Schnittstelle C4 durch den Adapter geschleift wird.

Der Modem MO moduliert die Sendedaten und demoduliert NF-Empfangsdaten mit Baudraten 1200/1200 dx, 75/1200 dx und 300/300 dx und ist mit der Grundplatte des Adapters über eine 20-polige Schnittstelle verbunden.

Die Stromversorgung des Adapters erfolgt über den Anschluß US des Sende-Empfangsgerätes. Der DC/DC Wandler DC/DC liefert die Sekundärspannung für den Adapter. Eine nur für den Betrieb des Modems benötigte zweite Spannung wird auf der Modem-Baugruppe mit einem weiteren DC/DC Wandler (in Figur 1 nicht gezeigt) erzeugt.

Der gesamte Adapter kann entweder in einem stoßsicheren, geschlossenen Gehäuse, das auch vor Tropfwasser und Staub schützt, mit einer im Fahrzeug installierten Halterung oder auch auf einer Steckkarte in einem PC untergebracht werden.

Weiterhin sind in Figur 1 schematisch Komponenten der portablen Workstation gezeigt. Neben einem Verteiler und einem Stromversorgungsmodul für die einzelnen Komponenten sind dies ein kleiner PC (Laptop) mit Drucker und Akustikkoppler. Die Workstation ist vorteilhaft kompakt in einem Koffer angeordnet.

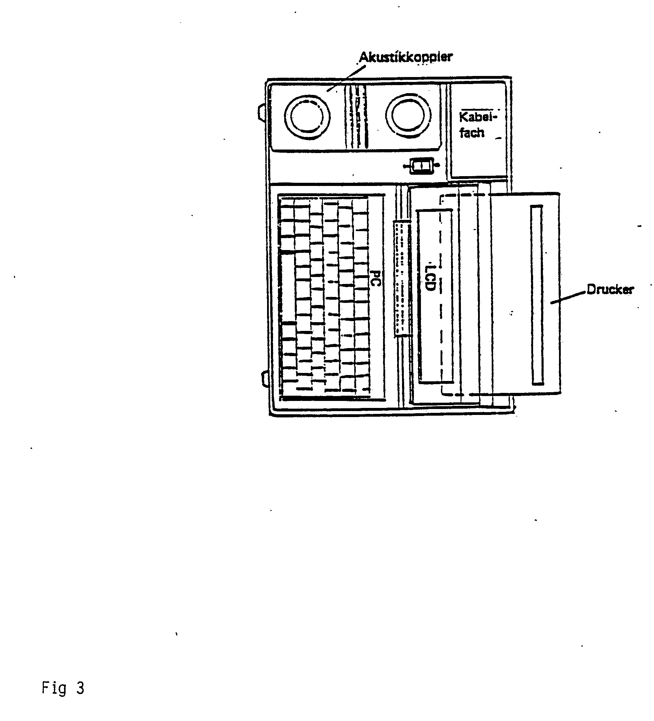

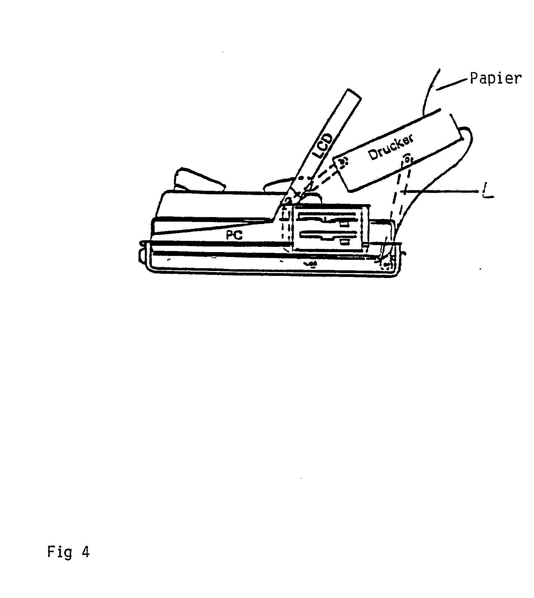

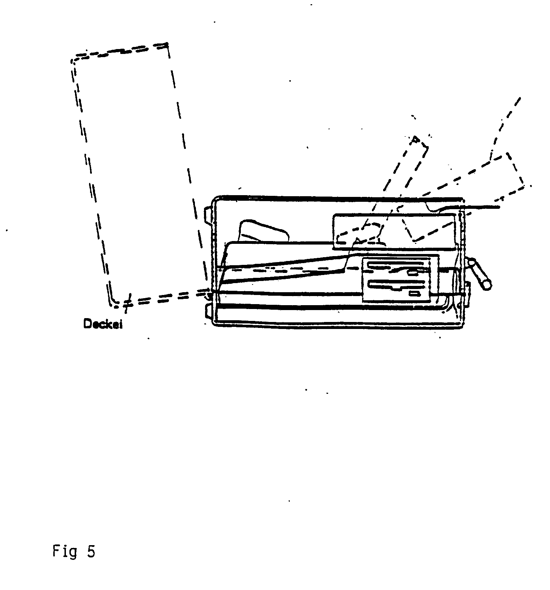

Figur 3 zeigt eine Oben-Ansicht der Workstation mit einer Anordnung von PC, Flüssigkristall-Display, LCD und Drucker und Akustikkoppler. Danach ist abweichend von der üblichen linksseitigen Anordnung des Druckers der Drucker oberhalb des PC, teilweise verdeckt durch den LCD, angeordnet. Figur 4 zeigt die Anordnung PC, LCD, Drucker in der für Tastatureingabe besonders geeigneten Stellung, bei der für eine Bedienperson vom Drucker ausgegebenes Papier oberhalb des LCD sichtbar wird. Figur 5 veranschaulicht die Anordnung von Drucker und LCD bei geschlossenem Deckel (durchgehende Linien) und geöffnetem Deckel (gestrichelte Linien).

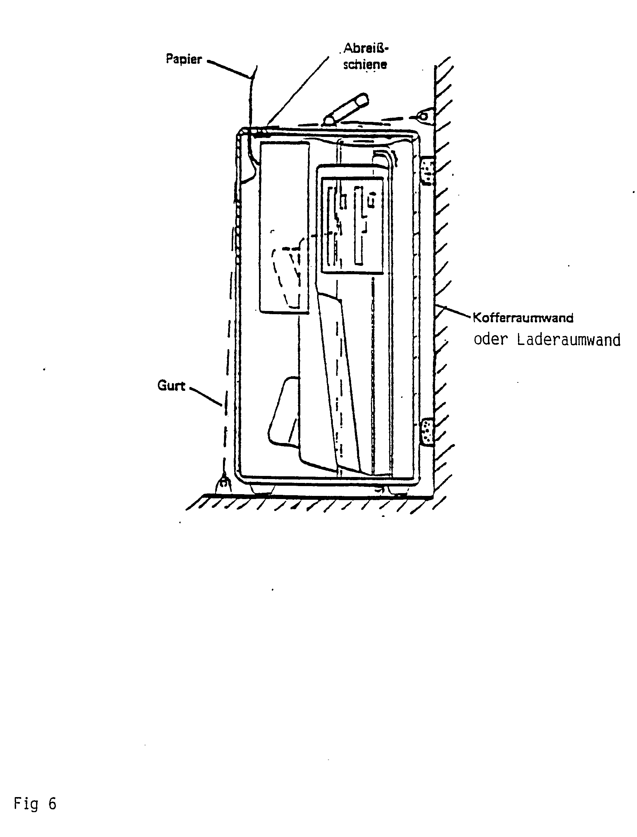

Durch ein Lenkergetriebe L (in Figur 5 nicht eingezeichnet) wird der Drucker angehoben und geschwenkt, sobald der LCD von der Tastatur weg nach oben geschwenkt wird. Bei nach unten geschwenktem Display LCD sind Drucker, LCD und PC raumsparend übereinander angeordnet. Figur 6 zeigt die Adaption der portablen Workstation im Kofferraum oder im Laderaum eines Kraftfahrzeugs.

Die oben geschilderte Konfiguration kann in folgenden Zuständen betrieben werden:

- Sprechbetrieb:

Hierbei wird durch die Aktivierung des Gabelkontaktes dem Mikroprozessor über die Leitung GAKO/SE die Instruktion zur Trennung der NF-Verbindung zwischen Modem und Sende-Empfangseinheit gegeben. Bei Anlageninbetriebnahme wird der Zustand des Gabelkontaktes nur dann übertragen, wenn dieser abgehoben war. Eine eventuell stattfindende Datenübertragung wird dann unterbrochen; die ausbleibende Quittungsmeldung kann jedoch benutzt werden, um die Workstation und/oder die betroffene Gegenstation zur Wiederholung der Datenübertragung zu instruieren. Parallel zum Sprechbetrieb kann die Workstation off-line Programme abarbeiten. Eine Unterbrechung des Datentransfers ist ebenfalls vorgesehen bei einer externen Anwahl des Funktelefons.

- Datenübertragung:

Hierbei können in an sich bekannter Weise Datenstrings vom PC über die Sende-Empfangseinrichtung an eine Kopfstation, eine andere mobile Station oder eine Btx-Zentrale abgesetzt werden oder empfangen werden, oder auch vom PC eigene Befehle und Meldungen an das Bediengerät oder das Sende-Empfangsgerät geschickt werden. Gleichfalls kann über die Tastatur des Bediengerätes vermittelt über den Mikroprozessor der PC zur Abarbeitung von Programmen instruiert werden.

Anstelle der Workstation können auch andere Datenendgeräte, im einfachsten Fall z. B. nur ein ASCII-Drucker für das Handschuhfach eines PKW, an die Schnittstelle C3 angeschlossen werden. Daneben ist auch der gleichzeitige Anschluß mehrerer Datenendgeräte an den Adapter über Schnittstellen C3, C3′, ... möglich.

Ein Gerät der oben beschriebenen Art kann zweckmäßigerweise in ein Automobil, in Eisenbahnwaggons bzw. Lokomotiven und auch in Flugzeugen eingesetzt werden.

**Patentansprüche**

1. Mobiles Funktelefon mit einer Sende-Empfangseinrichtung und einer Bedieneinrichtung, dadurch gekennzeichnet, daß die Sende-Empfangseinrichtung und die Bedieneinrichtung über einen Adapter mit Schnitt stellen C1 ... CN mit einem oder mehreren Datenendgeräten verbunden sind, wobei der Adapter einen Mikroprozessor und ein Modem aufweist und Mikroprozessor den Zustand von sowie die Kommunikation zwischen Sende-Empfangseinrichtung, Bedieneinrichtung, Modem und Datenendgeräten überwacht und steuert.

2. Mobiles Funktelefon nach Anspruch 1, dadurch gekennzeichnet, daß der Mikroprozessor NF-Signale, die über die Sende-Empfangseinrichtung dem Adapter zugeführt oder vom Adapter abgesetzt werden entweder zum Bediengerät oder zum Modem schaltet.

3. Mobiles Funktelefon nach Ansprüchen 1 bis 2, dadurch gekennzeichnet, daß bei Datenübertragung zwischen Adapter und Sende-Empfangseinrichtung kommunizierte NF-Signale zum Modem durchgeschaltet werden.

4. Mobiles Funktelefon nach Ansprüchen 1 bis 3, dadurch gekennzeichnet, daß zwischen Mikroprozessor und Bediengerät Steuerbefehle und Meldungen ausgetauscht werden, Meldungen des Mikroprozessors an das Bediengerät auf einem Display angezeigt werden und Steuerbefehle an den Mikroprozessor vom Bediengerät über die Tastatur abgesetzt werden können.

5. Mobiles Funktelefon nach Ansprüchen 1 bis 4, dadurch gekennzeichnet, daß dem Mikroprozessor der Zustand des Gabelkontaktes des Bediengerätes signalisiert wird und vom Mikroprozessor bewirkt wird, daß eine über die Sende-Empfangseinrichtung vermittelte Datenverbindung aufgetrennt wird, wenn der Gabelkontakt aktiviert wird.

6. Mobiles Funktelefon nach Ansprüchen 1 bis 5, dadurch gekennzeichnet, daß bei einer externen Anwahl des Funktelefons vom Mikroprozessor bewirkt wird, daß eine über die Sende-Empfangseinrichtung vermittelte Datenverbindung aufgetrennt wird.

7. Mobiles Funktelefon nach Ansprüchen 1 bis 6, dadurch gekennzeichnet, eine Benutzung des Funktelefons nur bei gültigem Benutzercode möglich ist und bei Eingabe eines Benutzercodes in das Bediengerät eine Auswertung des Codes durch den Mikroprozessor erfolgt.

8. Mobiles Funktelefon nach Ansprüchen 1 bis 7, dadurch gekennzeichnet, daß als Datenendgerät ein Drucker und/oder ein Blattleser und/oder ein Telefax-Gerät und/oder eine Workstation mit PC, Drucker und Akustikkoppler vorgesehen sind.

9. Mobiles Funktelefon nach Ansprüchen 1 bis 8, dadurch gekennzeichnet, daß der PC mit einer Btx-Steckkarte versehen ist.

10. Mobiles Funktelefon nach Ansprüchen 1 bis 9, dadurch gekennzeichnet, daß der Adapter AB in einem eigenen Sicherheitsgehäuse untergebracht ist und fest mit einem Fahrzeug verbunden ist.

11. Mobiles Funktelefon nach Ansprüchen 1 bis 10 dadurch gekennzeichnet, daß der Adapter auf einer Steckkarte für den PC angeordnet ist.

12. Mobiles Funktelefon nach Ansprüchen 1 bis 11, dadurch gekennzeichnet, daß PC, Akustikkoppler und Drucker in einem Koffer untergebracht sind, wobei Drucker, Papiervorrat für den Drucker, PC-Display und PC übereinander liegen, wenn der Kofferdeckel geschlossen ist und bei geöffnetem Kofferdeckel der Display schwenkbar ist und der Drucker mit dem Schwenken des Display in eine solche Position gebracht wird, das aus dem Drucker ausgetretenes Papier über den Display für eine Bedienperson sichtbar ist.

13. Mobiles Funktelefon nach Ansprüchen 1 bis 12, dadurch gekennzeichnet, daß im Koffergehäuse eine Öffnung vorgesehen ist, durch die bei geschlossenem Kofferdeckel und arbeitendem Drucker eine Papierausgabe erfolgen kann.

14. Mobiles Funktelefon nach Ansprüchen 1 bis 13, dadurch gekennzeichnet, daß das Datenendgerät sich im Fahrgastraum oder im Laderaum oder im Kofferraum eines Kraftfahrzeugs befindet.

Fig 1

Fig 2

Fig 3

Fig 4

Deckel

Fig 5

Fig 6